# EUROPEAN PATENT APPLICATION

(11) **EP 1 834 847 A1**
(43) Date of publication of application: **19.09.2007**
(21) Application number: 06381055.0
(22) Date of filing: 01.12.2006
(51) Int. Cl.: B60R 21/233, B60R 21/276

(54) **Dual depth airbag modules**

(30) Priority: 13.03.2006 ES 200600635
(71) Applicant: Dalphi Metal Espana, S.A., 28006 Madrid (ES)
(72) Inventor: Martín Huesca, Fernando, 47151, Valladolid (ES); Peyre, Jean-Christophe, 47151, Valladolid (ES)
(74) Representative: Elzaburu Marquez, Alberto

(57) **Abstract**

The invention relates to an airbag module for protecting the passenger of an automotive vehicle against a head-on impact comprising a gas generator (13) and an inflatable cushion fixed to a casing (11) as well as means for the inflatable cushion to deploy during the impact in a different manner according to the characteristics of the passenger, including means for deflecting the gas towards the outside of the airbag consisting of a window (31) located in the casing (11) and an inner sliding lid (33) that can close it partially and means for controlling the cushion volume consisting of at least a tether (19) fixed to a rod (41) embedded in the casing (11) and controlled by an actuator device configured to act on the lid (33) and the rod (41) such that when it is inactive, the window (31) remains completely open and when it is activated, the window (31) is closed and the tether (19) is released.

## Description

### Field of the Invention

The present invention relates to a dual depth airbag module for automotive vehicles and more particularly to a dual depth airbag module for protecting a passenger of an automotive vehicle against a head-on impact.

### Background of the Invention

Dual depth airbag modules, i.e. airbag modules that can adopt two different states according to the characteristics of the passenger when they deploy in the event of an impact of the vehicle, for example, a first state with a small volume to protect passengers located in a forward position and a second state with a larger volume to protect passengers located in a backward position, are already well known in the art and can be classified in two types.

In the first type of these known airbags, the two mentioned states are achieved with a double charge generator and a cushion with two volumes.

The first state is achieved by releasing the first charge of the generator thereby deploying the cushion to a small volume, aided by tear-off tethers inside the cushion which retain it.

The second state is achieved by releasing the two charges of the generator thereby filling the cushion completely. At the same time, the tethers are torn off by pressure allowing the inflation of the cushion to a large volume.

The decision of releasing one or both charges of the generator occurs depending on the position of the seat (small volume in a more forward position and large volume in a middle or more backward position).

The drawback of type of dual depth airbags is that the breaking of the tethers of the cushion is affected by the charges of the generator.

Another drawback is that they are not very flexible as regards the states of the airbag, because they do not allow intermediate states between the first and the second mentioned states.

In a second type of known airbags, dual depth is achieved with a single charge generator by incorporating ventilation means eliminating the excess gas for the first state. The following are included in the known proposals for this type of airbags.

Patent US 6,422,597 describes an airbag achieving dual depth by using means for deflecting the flow of gas and a tether arranged inside the cushion with a releasable retaining system.

Patent US 6,616,177 describes an airbag achieving dual depth by means of a valve which selectively regulates the gas supply to the two chambers in which the cushion is comparatively located, to one of the chambers or to the atmosphere.

Patent US 6,799,777 describes an airbag achieving dual depth by using only means for deflecting the flow of gas.

Patent US 6,808,205 describes an airbag achieving dual depth by using only tethers arranged inside the cushion with a releasable retaining system.

Patent application US 2005/0023811 describes an airbag in which gas is supplied to the cushion through a tube introduced therein and in which dual depth is achieved by using means for deflecting the flow of gas and tethers arranged inside the cushion with a releasable retaining system.

From these proposals, the ones using only tethers have the drawback that there may be reliability problems and the ones using means for deflecting the gas require a very precise positioning thereof which detracts from the design flexibility to be adapted to different requirements.

### Summary of the Invention

The present invention proposes an airbag module for protecting the passenger of an automotive vehicle against a head-on impact which, like other modules known in the art, comprises a gas generator and an inflatable cushion fixed to a casing, said generator having a plurality of outlet holes for supplying gas to the inflatable cushion, in the event of an impact through a diffuser integrated in the casing, and which also comprises means for the inflatable cushion to be deployed during the impact in a different manner according to the characteristics of the passenger, including means for deflecting the gas towards the outside of the airbag module and means for controlling the volume of the cushion controlled by an actuating device.

Unlike the known art, in the airbag module object of the present invention, the means for deflecting the gas towards the outside consist of a window located in the casing and a inner sliding lid that can close it partially, the means for controlling the volume of the cushion consist of one or several tethers fixed to a rod doubly embedded in the casing and the actuating device is configured to act on the lid and the rod such that when it is inactive, the window remains completely open and the rod remains doubly embedded in the casing and when it is activated, the window is partially closed moving the lid thereupon and one of the embeddings of the rod is eliminated which allows releasing the tethers.

The airbag module according to the present invention therefore achieves dual depth:

In the first state, which occurs upon activating the generator, the cushion inflates but the tethers are retained and secured to a rod doubly embedded in the casing which prevents the complete deployment of the cushion. In turn, the open window in the casing allows the exhaust of excess gases. Consequently the volume of the inflated cushion is small.

In the second state, which occurs upon activating the actuating device, the tethers are released by means of the movement of the arm holding one of the ends of the rod, allowing the complete deployment of the cushion, and the lid moves closing the window completely, allowing all the gas to be channeled towards the inside of the cushion. The volume of the inflated cushion is consequently high.

A plurality of cushion states with different gas pressures and volumes can be achieved depending on the offset between the activation of the generator and the activation of the actuating device.

Other features and advantages of the present invention will be disclosed in the following detailed description of an illustrative and in no case limiting embodiment of its object in relation to the attached drawings.

### Description of the Drawings

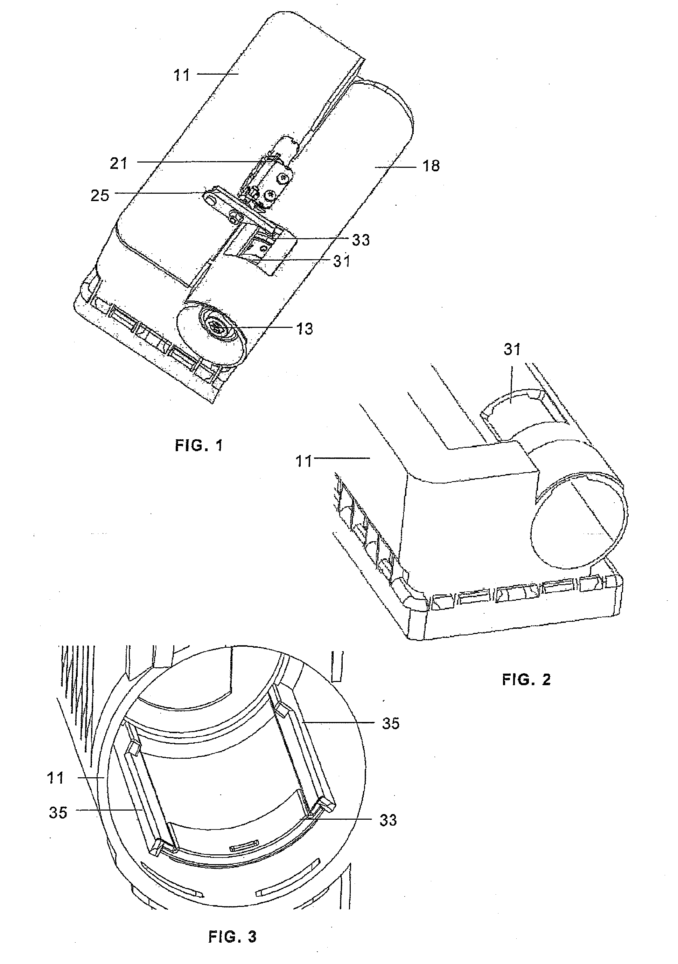

Figure 1 is a perspective view of an airbag module according to the present invention.
Figure 2 is a perspective view of the casing of an airbag module according to the present invention.
Figure 3 is a perspective view of the diffuser integrated in the casing of an airbag module according to the present invention with the window closed by the lid.

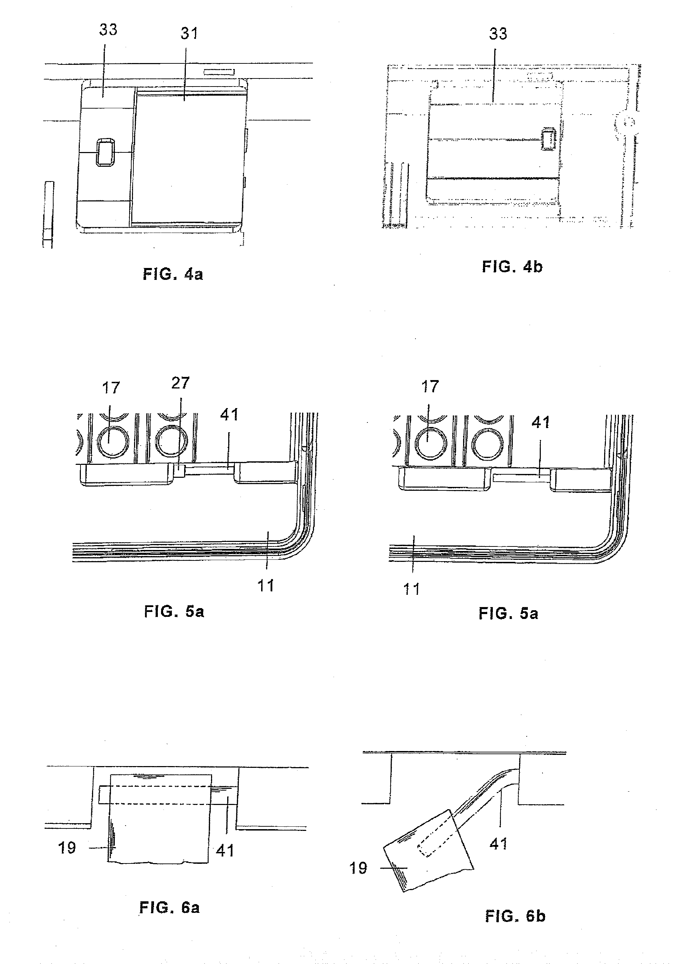

Figures 4a and 4b schematically show the window of the casing of an airbag module according to the present invention open and closed respectively.
Figures 5a and 5b show the tether-securing rod doubly embedded and singly embedded in the casing, respectively.
Figures 6a and 6b schematically show the tether-securing rod according to the present invention with the tether retained and released, respectively.

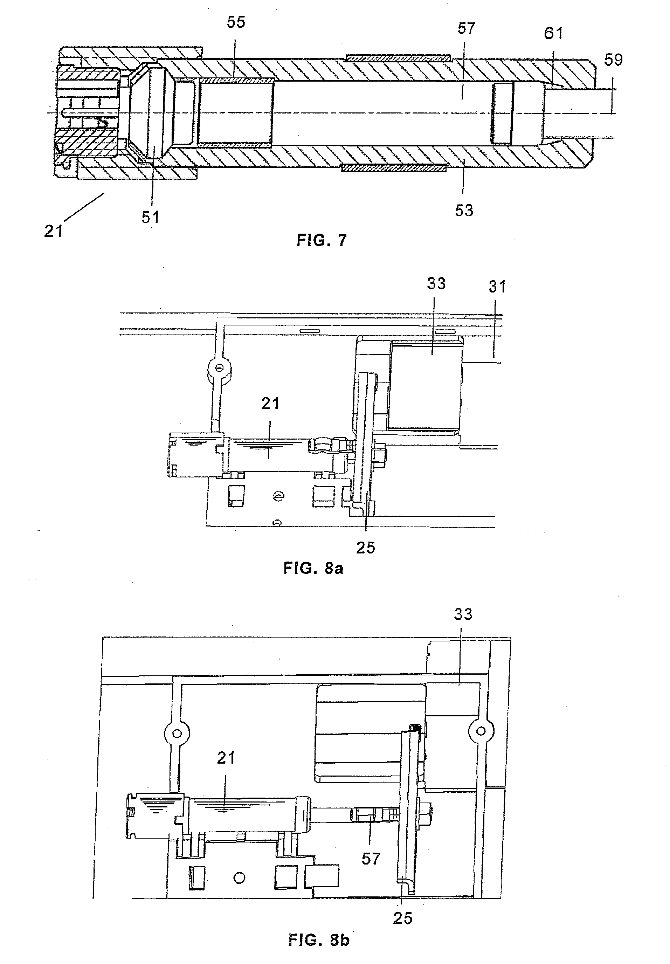

Figure 7 is a cross-section view of the actuating device of the airbag module according to the present invention.
Figures 8a and 8b schematically show the actuation of the actuating device on the window of the casing of an airbag module according to the present invention.

### Detailed Description of the Invention

For the purposes of the present invention, the essential elements of the airbag module object thereof are the following:
- A casing 11 serving as the main body and support of the remaining components. It includes a housing for the folded cushion (not shown in the figures), sized such that it allows housing the cushion according to the previously established folding process and a diffuser 18 integrated therein which serves to house the generator 13 and which is suitably configured to allow the gas from the generator 13 to reach the folded cushion. The casing 11 includes a window 31 to allow part of the gases from the generator 13 to not reach the cushion and a rod 41 embedded therein where a tether 19 is secured which limits the volume of the deployed cushion.
- An actuating device 21 controlling an arm 25 to, on one hand, release the rod 41 from one of its embeddings and on the other hand, move a sliding lid 33 to close the window 31, so that all the gas leaving through the gas outlet holes 17 of the generator 13 is channeled by means of the diffuser 18 towards the cushion which is folded inside the casing 11.

The essential features of the present invention are the following.

The window 31 for the outlet of gases is directly incorporated in the casing 11, having the shape of an opening in the wall of said casing and it is closed by means of a sliding lid 33 guided by means of guides 35 incorporated inside the casing 11.

The sliding lid 33 is controlled by the actuating device 21 through the arm 25.

The initiator 51 of the actuating device 21 is in an axial position with respect to its axis 59.

The arm 25 has a lug 27 at its end which holds one of the ends of the rod 41 in a retained position.

The rod 41 bends in the second state due to the pulling of the tether 19, allowing the release thereof.

The gas outlet window 31 is located in the area for housing the generator 13 in the casing 11.

The blocking of the actuating device 21 when it is inactive is achieved by means of the retaining bushing 55. During the ignition of the pyrotechnic material of the initiator 51 , the pressure of the gases releases the plunger 57 from the retaining bushing 55, allowing the movement, but due to the stepped shape of the cylinder 53 in its inner surface, the retaining bushing 55 is prevented from moving together with the plunger 57.

When the actuating device 21 is activated, its blocking is achieved by means of the locking of the encasement of the plunger 57 itself in the inner surface of the cylinder 53. For this purpose, the inner surface of the cylinder 53 at the end of the run of the plunger 57 has a conical shape 61 thereby achieving the encasement of the plunger 57 itself, by means of the speed of the latter at the end of the run, without the need for any other additional element.

One advantage of the invention is that the gas outlet window 31 in the casing 11 can easily be located along the entire length of the housing of the generator 13. This means that the pressure difference between the different states can be regulated by moving the window 31 with a minimum modification in the design of that area of the casing, maintaining the same actuating device 21 and the other mechanical components. This can be useful while manufacturing different airbag modules with a different balance between the first and the second state.

Another advantage is that the closure of the window 31 by means of the sliding lid 33 allows adjusting it to the different dimensions by just varying the width if the lid 33, without needing to vary the run of the plunger 57 of the actuating device (and therefore its design). Said sliding lid 33 is guided by the inside of the housing of the generator 13 in the casing 11 of the module, which allows the pressure of the outlet gases of the generator 13 to push the lid against the inner wall of said casing 11, forcing the closure of the window 31 to be even more hermetically sealed. On the other hand, since the guiding system is inside the casing 11, the accumulation of dust, oil and any other foreign element that could block said mechanism during the useful life of the airbag module decreases.

Another advantage is that since the initiator 51 of the actuating device 21 is in an axial position with respect to its axis 59, it does not transfer radial stresses to it therefore the anchorings to the casing 11 of the airbag module do not need a great robustness and the stresses in an unwanted direction are prevented from blocking it. In turn, this configuration simplifies the geometry of the actuating device 21.

Another advantage is that the fact that the rod 41 bends in the second state allows the tether 19 to start being released as soon as the movement of the plunger 57 of the actuating device 21 starts, being aided by the pulling of the tether 19 to bend the rod 41 and thus being released. This prevents the pulling of the tether 19 from blocking the movement of the rod 41.

Another advantage is that since the gas outlet window 31 is located in the area of the diffuser of the casing 11 where the pressure is much greater than in the rest of the casing, it allows having a smaller window for achieving a certain pressure loss. The closer the window 31 is to the gas outlet holes of the generator 13, the smaller can the section of said window be. Accordingly, the movement of the plunger 57 of the actuating device 21 is reduced, which entails smaller dimensions of said device.

The airbag module according to the present invention comprises both metallic and plastic casings, obtaining in the latter case a weight reduction of the module and a more compact design since several components can be grouped into a single one.

In plastic casings, the guides 35 are incorporated in the casing 11 itself.

Although several embodiments of the invention have been described and shown, it is evident that modifications comprised within the scope thereof can be introduced therein, and the latter must not be considered limited to said embodiments but to the contents of the following claims.

## Claims

1. An airbag module for protecting the passenger of an automotive vehicle against a head-on impact comprising a gas generator (13) and an inflatable cushion fixed to a casing (11), said generator (13) having a plurality of outlet holes (17) for the supply of gas to the inflatable cushion in the event of an impact through a diffuser (18) integrated in the casing (11), and also comprising means for the inflatable cushion to deploy during the impact in a different manner according to the characteristics of the passenger, including means for deflecting the gas towards the outside of the airbag module and means for controlling the cushion volume controlled by an actuating device, **characterized in that**:
a) the means for deflecting the gas towards the outside consist of a window (31) located in the casing (11) and an inner sliding lid (33) that can close it partially;
b) the means for controlling the cushion volume consist of at least a tether (19) fixed to a rod (41) embedded in the casing (11);
c) the actuating device (21) is configured to act on the lid (33) and the rod (41) such that when it is inactive, the window (31) remains completely open and the rod (41) remains doubly embedded in the casing (11) and when it is activated, the window (31) is closed, moving the lid (33) thereupon and one of the embeddings of the rod (41) is eliminated which allows releasing the tether (19).

2. An airbag module for protecting the passenger of an automotive vehicle against a head-on impact according to claim 1, **characterized in that** the casing (11) includes in its inside guides (35) in opposite sides of the window (31) to facilitate the movement of the lid (33).

3. An airbag module for protecting the passenger of an automotive vehicle against a head-on impact according to claim 1, **characterized in that** the actuating device (21) comprises a cylindrical casing (53), a pyrotechnic initiator (51) and a plunger (57) that can be moved due to the pressure created by the gases generated upon activating said pyrotechnic initiator (51) to act on the lid (33) and the rod (41), the cylindrical casing (53) having in its inside a busing (55) adjacent to the pyrotechnic initiator (51) for retaining the plunger (57) and encasement means (61) for the plunger (57), after activating the pyrotechnic initiator (51), delimiting a predetermined length of the run of the plunger (57).

4. An airbag module for protecting the passenger of an automotive vehicle against a head-on impact according to claim 3, **characterized in that** it also includes an arm (25) joined to the lid (33) and actuated by the plunger (57).

5. An airbag module for protecting the passenger of an automotive vehicle against a head-on impact according to claim 4, **characterized in that** the arm (25) also includes a lug (27) serving as a means for embedding the rod (41).

6. An airbag module for protecting the passenger of an automotive vehicle against a head-on impact according to claim 3, **characterized in that** the pyrotechnic initiator (51) is arranged in an axial position with respect to the axis (59) of the actuating device.
